# DEMANDE DE BREVET EUROPEEN

(11) **EP 1 600 875 A1**
(43) Date de publication de la demande: **30.11.2005**
(21) Numéro de dépôt: 05291137.7
(22) Date de dépôt: 26.05.2005
(51) Int. Cl.: G06F 17/60

(54) **Système de collecte et de supervision de données relatives à la distribution et à la consommation d'énergie**

(30) Priorité: 27.05.2004 FR 0405748
(71) Demandeur: Chauvin, Arnoux, 92200 Neuilly sur Seine (FR)
(72) Inventeur: Arnoux, Daniel, 75018 Paris (FR); Jensen, Peter, 75018 Paris (FR); Arnoux, Axel, 75018 Paris (FR); Piaud, Didier, 75018 Paris (FR)
(74) Mandataire: Breese, Pierre

(57) **Abrégé**

La présente invention se rapporte à un système de collecte et de supervision de données relatives à la distribution et à la consommation d'énergie sur un site principal caractérisé en ce qu'il comprend sur le site principal un serveur de mesure relié directement, sans concentrateur, aux dispositifs d'acquisition de mesure (10) par réseau de communication (à travers des adaptateurs : 3, 6, 7 et 8), ainsi qu'à un équipement d'exploitation client et en ce que ledit serveur de mesure comporte une interface TCP/IP pour les échanges de données numériques avec un logiciel de navigation installé sur ledit équipement d'exploitation client.

## Description

La présente invention concerne le domaine de la collecte et de la supervision de données relatives à la distribution et à la consommation d'énergie, par exemple la consommation d'électricité, de gaz ou d'eau sur un site industriel, utilisant les technologies Web.

On connaît, dans l'état de la technique, différentes solutions faisant généralement appel à un serveur de collecte dialoguant avec des capteurs locaux dont les données sont transmises par l'intermédiaire d'un concentrateur.

Le brevet américain US6088659 décrit un serveur de lecture automatique des compteurs possédant une architecture ouverte répartie et servant à la collecte, au chargement et à la gestion des données à l'échelle du système. Les données sont relevées auprès de compteurs d'énergie et acheminée automatiquement à destination de systèmes d'entreprise situés en amont. Le serveur de lecture automatique des compteurs, qui comprend un répertoire des données provenant des compteurs, permet en outre d'accéder en temps utile aux informations en incluant les données portant sur la collecte, le stockage, la validation, l'estimation, l'édition, la publication et la sécurisation des données relatives à la consommation des compteurs et aux intervalles. Le serveur de lecture automatique des compteurs reçoit les données depuis les compteurs munis de modems, par le biais de lignes téléphoniques conventionnelles ou de réseaux cellulaires. Les données au format des compteurs / de l'infrastructure de communication sont converties en un format utilisable par le serveur de lecture automatique des compteurs. Avant transmission, ces données sont converties vers ou depuis le format compatible avec le serveur de lecture automatique des compteurs et celui spécifique d'un système d'entreprise situé en amont.

Le brevet américain US6178362 décrit un système de gestion de l'énergie ainsi qu'un procédé correspondant qui permettent aux consommateurs d'énergie qui sont en charge d'importantes installations physiques d'avoir une vue d'ensemble de la consommation de leurs installations et de pouvoir optimiser cette consommation. Le système peut comprendre des outils de visualisation 3D, des procédés d'analyse de la consommation d'énergie, des moyens de communication par le biais du protocole TCP/IP et une interface basée sur le Web. Le système comprend également un système et un procédé d'acquisition et de diffusion des données en temps réel qui permet de communiquer à l'intérieur du système les données relatives à l'énergie en temps réel.

Le brevet américain US6327541 décrit un système de gestion électronique de distribution d'énergie comprenant des sous-systèmes pour l'acquisition des données de mesure, une mémoire locale pour l'enregistrement des données locales et un système de télécollecte de ces informations.

La demande internationale WO 0229514 concerne un système de gestion d'énergie utilisant le réseau comme passerelle, système dans le cadre duquel un utilisateur d'un système individuel peut être automatiquement connecté à plusieurs systèmes différents. Ce système permet également de cumuler des données émanant de plusieurs sites individuels dans un seul site, de diffuser des données émanant d'un site vers plusieurs sites ainsi que d'utiliser un agencement du type pyramide. Ce système permet de connecter des sites individuels de gestion à l'aide de la passerelle réseau.

Ces différentes solutions mettent en oeuvre des ressources réparties et des moyens de collecte à distance des données enregistrées dans des mémoires tampon locales. L'exploitation se fait nécessairement en temps différé, et ne permet pas un suivi des évolutions instantanées.

Le but de la présente invention est de proposer une solution permettant de gérer en temps réel des données relatives à la supervision de la consommation d'énergie avec des moyens informatiques de faible coût, et une exploitation simplifiée.

Un tel système est en particulier destiné aux entreprises industrielles, et notamment les gestionnaires d'immeubles de bureaux, les sites particuliers tels que les parcs d'expositions, les aéroports, les exploitations des copropriétés, mais aussi les campings, qui sont amenés à comptabiliser de manière détaillée leur propre consommation d'énergie ou la consommation d'énergie de leurs clients. Cela peut être dans un souci d'optimisation de la consommation, et donc du coût d'exploitation ou bien afin d'effectuer de la sous-facturation.

La diversité et la taille des applications ne permettent pas toujours la mise en place d'un système centralisé, cher en coûts d'exploitation externes et en infrastructure locale. Le système proposé a l'avantage d'être géré en local par l'exploitant lui-même, lui permettant de limiter les coûts directs et indirects liés au coût de la main d'ouvre et à l'acquisition d'équipements intermédiaires.

A cet effet, l'invention concerne selon son acception la plus générale un système de collecte et de supervision de données relatives à la distribution et à la consommation d'énergie sur un site principal caractérisé en ce qu'il comprend sur le site principal un serveur de mesure relié directement, sans concentrateur, aux dispositifs d'acquisition de mesure par réseau de communication, ainsi qu'à un équipement d'exploitation client et en ce que ledit serveur de mesure utilise le logiciel de navigation installé sur ledit équipement pour exploitation des données ou comporte une interface TCP/IP pour exploitation des données par le logiciel de navigation installé sur des équipements distants.

On entend par concentrateur au sens du présent brevet un équipement électronique non intégré dans un appareil de mesure qui interroge les appareils de mesure en mémorisant les données de mesures en vue de leur transmission à un serveur.

La présente invention sera mieux comprise à la lecture de la description qui suit, se référant aux dessins annexés relatifs à un mode non limitatif de réalisation, où:
- la figure 1 représente une vue schématique de la topologie du système
- la figure 2 représente une vue schématique des échanges de données dans le serveur de mesure
- la figure 3 représente une vue schématique de l'architecture du serveur de mesure.

Le système décrit concerne un système automatisé de collecte, de traitement, d'enregistrement, d'affichage et de publications de données de mesure de consommation d'énergie, destiné à l'équipement d'un site principal, comprenant éventuellement des sites secondaires.

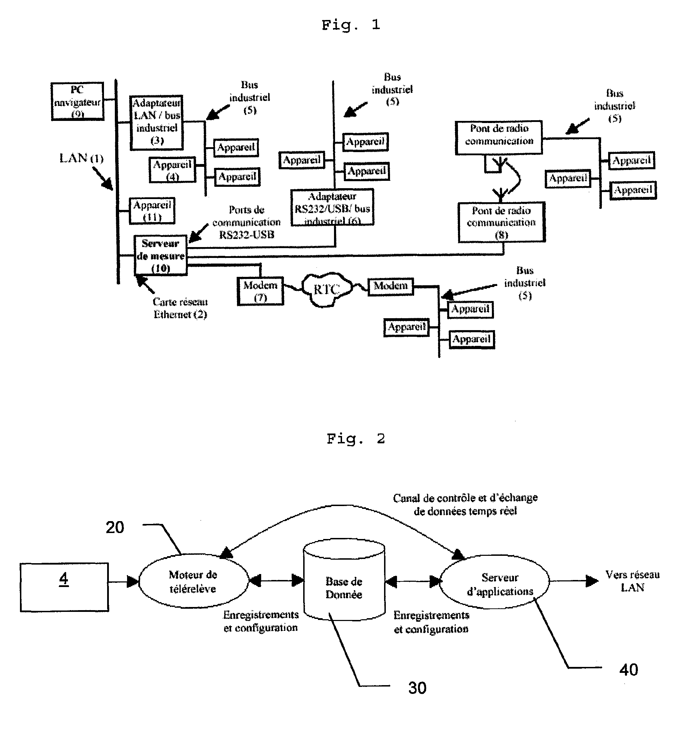

Le système dont la topologie est représentée en figure 1 comprend un serveur d'applications (pouvant directement intégrer le serveur Web ou alternativement être couplé à un serveur Web externe), une base de données et un moteur de télé-relève. L'ensemble de ces éléments fonctionnent sur un ou plusieurs ordinateurs, reliés par réseau LAN. Cet ensemble est installé chez l'exploitant du système.

Les données transitent sur le réseau LAN - Local Area Network (1) interne de l'exploitant, soit en interne du site, soit à l'extérieur à travers un accès VPN (Réseau Virtuel Privé). Le réseau LAN (1) est généralement constitué par un réseau Ethernet. L'administration, la configuration et la consultation du système s'effectuent à travers une interface navigateur Web installé sur un ordinateur de bureau (9).

Les appareils de mesure (4) sont des compteurs d'énergie, des analyseurs de réseaux électriques et tout autre appareil de mesure de grandeurs électriques ou fluides, installés dans un site local ou sur plusieurs sites. L'accès aux appareils installés en local se fait par un réseau de communication industriel ou LAN, éventuellement étendu par un système de transmission sans fils local.

L'accès aux appareils se trouvant sur un réseau distant se fait par une liaison de communication propriétaire, filaire ou sans fils, par RTC ou par VPN.

Les compteurs d'énergie peuvent compter des grandeurs électriques, mono ou polyphasés, des fluides (eau, gaz) et autres grandeurs (température, ...). Les analyseurs de réseaux électriques enregistrent des données de qualité de la fourniture de l'énergie.

Le système communique avec les appareils de mesure par un bus industriel de communication (5) de type RS485, Profibus, Devicenet ou Fieldbus par modem via RTC, par Ethernet via un convertisseur Ethernet/RS485, directement par Ethernet (TCP/IP, UDP/IP, sockets) ou par un système de transmission sans fils privé (Bluetooth, Wi-Fi).

Le système échange les données de mesures et de contrôle avec les appareils de mesure par un protocole de communication industriel (Jbus/RTU, Modbus/ASCII, Modbus/RTU, SCPI, Modbus/TCP) ou informatique (TCP/IP, FTP, SMTP...).

Un adaptateur RS232 ou USB (6) vers le bus industriel (5) est utilisé pour transformer les signaux des ports de communication du serveur de mesure à des signaux utilisés sur le bus industriel (gestion prise de ligne et niveaux électriques). Il assure également l'isolation galvanique.

La carte réseau Ethernet (2) et l'adaptateur LAN/bus industriel (3) sont utilisés pour encapsuler les données numériques échangées dans un protocole informatique (TCP/IP habituellement), puis faire transiter les requêtes/réponses du protocole industriel entre le serveur de mesure et les équipements. Les appareils (11) peuvent également être reliés directement au réseau LAN (1) en intégrant un adaptateur Ethernet.

Des modems (7) assurent l'accès aux appareils installés sur d'autres sites ou dans des bâtiments éloignés.

Les ponts de communication (8) étendent le bus industriel dans des endroits où le câblage est difficile voire impossible. Ils peuvent fonctionner par différentes technologies, telles que Bluetooth (IEEE 802.15) ou Wi-fi (IEEE 802.11).

Les accès au serveur de mesure se font par le biais du navigateur Web installé sur l'équipement ou tout autre navigateur installé sur des équipements ayant accès au réseau LAN. Plusieurs connexions simultanées sont possibles.

Le serveur de mesure (10) est l'élément central du système. C'est lui qui sert d'interface avec les utilisateurs par l'interface Web et qui pilote les télé-relèves des appareils, le traitement, l'enregistrement, l'affichage et la publication de données. Le serveur de mesure est habituellement installé sur un ordinateur de type PC.

La figure 2 donne une représentation du serveur, avec le flux de contrôle et de données.

Le serveur de mesure comporte trois éléments : un serveur d'applications/Web (40), une base de données (30) et un moteur de télé-relève (20). Ces trois éléments sont interconnectés et communiquent afin d'assurer les fonctions du système.

Le moteur de télé-relève (20) est un automate qui reçoit les ordres pour lancer les campagnes de mesures et pilote l'acquisition des données par les appareils de mesures (4). Ces données sont enregistrées dans une base de données (30) qui dialogue avec le serveur d'application (40). Les données sont échangées en temps réel entre le moteur de télérelève (20) et le serveur d'application (40). Les configurations sont également mémorisées dans la base de données (30).

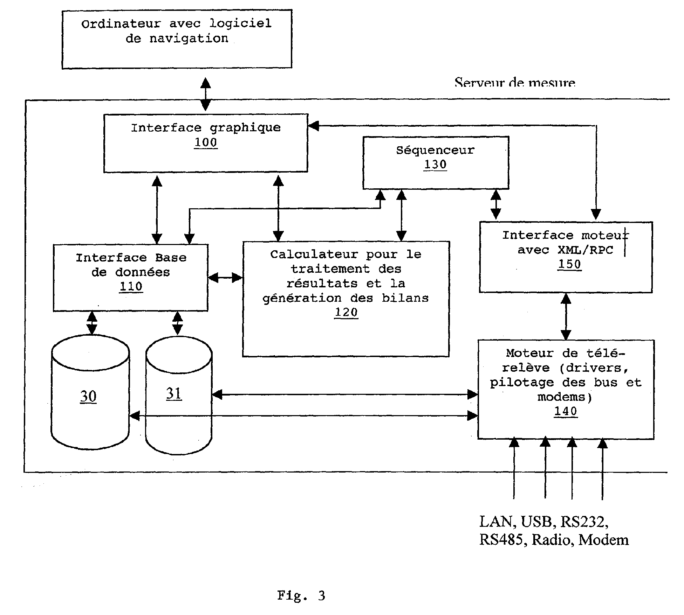

La figure 3 représente le schéma de principe du serveur de mesure.

Il comprend une interface graphique (100) précalculant des représentations numériques et graphiques à partir des données provenant de la base de données (30) dans laquelle sont enregistrées les données. L'interface graphique (100) sert également à la configuration du système et à la programmation des différentes actions à réaliser au travers du navigateur.

L'accès à la base de données se fait par l'intermédiaire d'une interface (110). Cette interface utilise un accès de type ODBC (Open Data Base Connectivity) ou autre vers la base de données. Les résultats de ces prétraitements sont enregistrés dans une base de données (31), et sont exploitées par un module calculateur (120) réalisant le traitement des bilans.

Un séquenceur (130) lance les traitements et les actions automatiques programmés selon des paramètres enregistrés dans la base de données (30).

Il commande le module calculateur (120) pour la génération de bilans automatiques et, à travers une interface (150), il commande également le fonctionnement d'un module (140) comportant les pilotes (ou « drivers ») pilotant les appareils de mesure connectés sur les bus et modems.

L'interface moteur (150) pilote le moteur pour la récupération des données instantanées.

Afin d'assurer une homogénéité complète avec l'environnement Web, les différentes applications fonctionnant sur le serveur sont développées dans un langage objet.

### FONCTIONS DU SYSTEME

### Télé-relèves des appareils

L'utilisateur se connecte au serveur de mesure (10) à travers son navigateur (9). L'interface Web lui permet de programmer et lancer des télé-relèves des appareils (4) reliés au serveur.

Les télé-relèves peuvent être lancés immédiatement ou bien programmés de manière périodique ou à des dates fixes. Le serveur de mesure communique avec les appareils par différentes interfaces (3, 6 et 8) ou par modem (7).

La programmation des télé-relèves est enregistrée dans la Base de Données.

### Visualisation des mesures temps-réel

La surveillance de l'état du réseau se fait par l'affichage des mesures des appareils dans des pages Web dans le navigateur (9). Ces pages sont réactualisés automatiquement en temps-réel.

Les types d'informations affichées sont :
- L'état des alarmes
- Les valeurs des compteurs d'énergie
- Les valeurs des dépassements de seuils
- Les valeurs maximales et minimales
- Les valeurs numériques des grandeurs électriques (tension, courant, cos phi, puissance active, réactive, apparente, THD...)
- Des courbes affichant une ou plusieurs grandeurs surveillées dans le temps.

Par ces pages, il est également possible d'acquitter des alarmes ou bien modifier le paramétrage des appareils. L'utilisateur peut créer des pages sur mesure, lui permettant d'afficher seulement les grandeurs souhaitées.

Lorsque l'utilisateur demande la visualisation d'une page de mesures temps-réel, le serveur d'applications en informe le moteur de télé-relève, qui rapatrie les données des appareils par l'interface de communication avec les appareils. Une fois les données disponibles dans le moteur de télé-relève, celui-ci les transmet par le canal d'échange directe avec le serveur d'applications/Web, qui transmet les données au navigateur. Ce mécanisme automatique permet la réactualisation des données à intervalle régulier (par exemple toutes les secondes).

Le serveur d'applications/Web utilise plusieurs techniques pour réactualiser les mesures dans la fenêtre du navigateur client : Une première méthode comporte un système d'échange Applet/Servlet. Ce système permet de traiter les mesures côté serveur dans un Servlet, puis de le mettre en forme côté client dans l'Applet. Une fois terminé, l'Applet client interroge le Servlet pour récupérer des données mises à jour. De son côté, le Servlet interroge des Servlets dans d'autres tâches (ou « threads ») s'exécutant sur le serveur, qui sont chargées d'interroger les appareils à travers le moteur de télé-relève.

Une seconde méthode utilise des fonctions Javascript s'exécutant côté du navigateur client afin de mettre à jour certaines pages HTML,. Ces fonctions permettent de demander la réactualisation de la page en cours ou l'affichage d'une nouvelle page dans le navigateur. Cette page est mise à jour côté serveur dans un Servlet, qui insert les éléments dynamiquement.

Enfin, il est possible d'assurer un transfert temps-réel des données de mesure entre l'appareil de mesure et le client par l'utilisation d'un ou plusieurs protocoles de transferts de flux (streaming).

### Bilans et rapports.

Les bilans générés sur le serveur exploitent les données télé-relevées des appareils et enregistrées dans la base de données. Les bilans générés couvrent un large spectre d'applications, et notamment, mais non limité à, les informations relatives à l'exploitation de l'installation, la gestion des incidents, la consommation de l'énergie électrique ou d'autres fluides et à la qualimétrie (qualité du réseau électrique). Les bilans peuvent également appliquer des traitements par des librairies, permettant notamment de valoriser l'énergie comptée par un calcul spécifique en application d'un ou plusieurs contrats tarifaires.

Les bilans générés sont présentés sous plusieurs formes contenant des éléments, tels que:
· Des graphiques
· Des tableaux

Une fois généré, le bilan peut être affiché par le navigateur de l'utilisateur ou bien télé-chargé sur le poste en local. L'utilisateur peut également enregistrer le bilan dans la Base de Données sur le serveur, le modifier en appliquant d'autres paramétrages, ou bien l'éditer.

L'édition se fait par plusieurs moyens différents :
- Impression
- Envoi de courrier électronique
- Copie sur le disque dur d'une machine monté en lecteur réseau sur le réseau LAN.

Les rapports générés permettent de créer des documents imprimables ou utilisables directement avec des applications tierces telles que Microsoft Excel, Adobe Reader ou Internet Explorer (noms commerciaux).

Les formats générés sont :XML(Extended Markup language), Pdf (format propriétaire de la société Adobe) et xls, cvs, txt (formats propriétaires de la société Microsoft). Les rapports incluent les résultats d'un ou plusieurs bilans, avec en plus des possibilités d'insertion d'en-têtes et des rubriques de commentaires.

### Automatisation des tâches

L'automatisation des tâches permet de programmer des tâches qui doivent être exécutées de manière périodique ou par des dates fixes et qui peuvent enchaîner plusieurs actions à la suite.

Les principales actions liées à l'automatisation des tâches sont :
· Les télé-relèves
· La création des bilans et des rapports
· L'édition des bilans ou de rapport

D'autres actions telles que la gestion de la Base de Données (purge etc.) peuvent aussi être lancées.

Toute l'application sur le serveur d'application, et notamment la partie d'automatisation des tâches est gérée par un système multi-tâches (basé sur une architecture de Servlets Web). Ceci garantit que les différentes fonctions du système fonctionnent correctement et de manière simultanée. Le système fonctionne donc même s'il n'y a aucune session utilisateur ouverte et le serveur reste toujours disponible pour effectuer d'autres tâches.

### Administration

L'administration du serveur concerne les tâches liées à :
· La gestion des appareils installés
· La gestion des utilisateurs
· La gestion des licences
· La gestion des sessions
· La gestion des langues
· L'administration de la base de données
· La mise à jour du système

L'interface Web spécifiquement accessible à l'administrateur du système permet d'effectuer ces tâches.

Le système est installé chez l'exploitant de l'installation et procure ainsi les avantages suivants:
- La fiabilité des connexions entre le système et les appareils de mesure
- La fiabilité des connexions entre les utilisateurs et le système
- La sécurisation des données, qui ne sont pas gérées par, et ne transitent pas par, des tierces parties
- absence de concentrateurs (point d'accès locaux assurant l'enregistrement et accès en local, anglais: concentrator/gateway device), diminuant fortement le coût de l'installation
- Le problème de sécurité informatique et notamment le passage des para-feux (firewalls) est inexistant
- Le fonctionnement par RTC ou par VPN procure un niveau de sécurité élevé

Les avantages liés à la solution Web sont :
- l'accès simultané au système à plusieurs utilisateurs par rapport à une solution basé sur une application classique, mono-poste ou multiposte clients-serveur.
- l'accès au système dans un environnement informatique hétérogène (Windows, Unix, Mac) et ne nécessite aucun installation spécifique sur les postes des utilisateurs

Les avantages liés à l'utilisation du bus industriel et au réseau LAN :
- l'utilisation d'un bus industriel dédié pour le transfert des données des appareils. Cela décharge le réseau LAN interne de l'entreprise.
- l'utilisation de passerelles LAN/bus industriel, permettant de bénéficier de l'infrastructure LAN des sites pour acheminer les données des appareils éloignés.
- L'utilisation de passerelles LAN/bus industriel, permet d'interfacer des appareils non équipés d'une interface LAN (Ethernet) et les relever par le biais du réseau LAN de l'entreprise.

## Revendications

1. Système de collecte et de supervision de données relatives à la distribution et à la consommation d'énergie sur un site principal **caractérisé en ce qu'**il comprend, sur le site principal, un serveur de mesure relié directement,, sans concentrateur, aux dispositifs d'acquisition de mesure (10) par réseau de communication (à travers des adaptateurs : 3, 6, 7 et 8), ainsi qu'à un équipement d'exploitation client et **en ce que** ledit serveur de mesure comporte une interface TCP/IP pour les échanges de données numériques avec un logiciel de navigation installé sur ledit équipement d'exploitation client.

2. Système selon la revendication 1,
**caractérisé en ce que** le serveur de mesure comporte un serveur d'applications/Web (40), une base de données (30) et un moteur de télé-relève (20) réunis et pouvant fonctionner sur un même ordinateur.

3. Système selon la revendication 2,
**caractérisé en ce qu'**il comprend une interface graphique (100) précalculant des représentations numériques et graphiques à partir des données provenant de la base de données (30) dans laquelle sont enregistrées les données, et servant également à la configuration du système et à la programmation des différentes actions à réaliser au travers du navigateur.

4. Système selon la revendication 2 ou 3, **caractérisé en ce qu'**il comprend l'accès à la base de données qui se fait par l'intermédiaire d'une interface (110) exploitant un accès de type ODBC (Open Data Base Connectivity) vers la base de données et **en ce que** les résultats de ces prétraitements sont enregistrés dans une base de données (31), et sont exploités par un module calculateur (120) réalisant le traitement des bilans.

5. Système selon la revendication 2, 3 ou 4,
**caractérisé en ce qu'**il comprend un séquenceur (130) destiné à lancer les traitements et les actions automatiques programmés selon des paramètres enregistrés dans la base de données (30) et à commander le module calculateur (120) pour la génération de bilans automatiques et, à travers une interface (150), commander le fonctionnement d'un module (140) comportant les pilotes (ou « drivers ») pilotant les appareils de mesure connectés sur les bus et modems.

6. Système de collecte et de supervision de données relatives à la distribution et à la consommation d'énergie selon l'une quelconque des revendications 1 à 5, **caractérisé en ce que** le serveur de mesure comporte des moyens pour la réalisation automatisée de télé-relèves des appareils de mesures, stockage des données mesurées, le traitement des données de mesure, le calcul de représentations graphiques et numériques des résultats et la publication des résultats par l'interface Web (et courrier électronique, copie à travers de lecteurs réseau).
